# EUROPEAN PATENT SPECIFICATION

(11) **EP 2 873 060 B1**
(45) Date of publication and mention of the grant of the patent: **13.01.2016**
(21) Application number: 13765439.8
(22) Date of filing: 25.06.2013
(51) Int. Cl.: G06T 11/00

(54) **EMBOLIZATION VOLUME RECONSTRUCTION IN INTERVENTIONAL RADIOGRAPHY**
EMBOLISATIONSVOLUMENREKONSTRUKTION IN DER INTERVENTIONELLEN RADIOGRAFIE
RECONSTRUCTION DE VOLUME D'EMBOLISATION DANS UNE RADIOGRAPHIE INTERVENTIONNELLE

(30) Priority: 10.07.2012 EP 12305822
(43) Date of publication of application: 20.05.2015
(73) Proprietor: Koninklijke Philips N.V., 5656 AE Eindhoven (NL)
(72) Inventor: FLORENT, Raoul, NL-5656 AE Eindhoven (NL)
(74) Representative: Steffen, Thomas
(86) International application number: PCT/IB2013/055211
(87) International publication number: WO 2014/009827

(56) References cited:
- US-A1- 2009 192 385
- JAN KUNTZ ET AL: "Towards 4D Intervention Guidance Using Compressed Sensing", PROCEEDINGS OF THE 11TH INTERNATIONAL MEETING ON FULLY 3D IMAGE RECONSTRUCTION IN RADIOLOGY AND NUCLEAR MEDICINE, 11 July 2011 (2011-07-11), pages 347-350, XP055022971, Potsdam, Germany
- S. A. M. Baert ET AL: "3D Guide Wire Reconstruction from Biplane Image Sequences for 3D Navigation in Endovascular Interventions" In: "Medical Image Computing and Computer-Assisted Intervention - MICCAI 2002", 10 October 2002 (2002-10-10), Springer Berlin Heidelberg, Berlin, Heidelberg, XP055092109, ISBN: 978-3-54-044224-0 vol. 2488, pages 404-410, DOI: 10.1007/3-540-45786-0_50, the whole document

## Description

### FIELD OF THE INVENTION

The present invention relates to an image processing apparatus, to an image processing system, to a method of image processing, to a computer readable medium, and to a computer program element.

### BACKGROUND OF THE INVENTION

Although usually to be avoided, an embolization, that is, the occlusion of a human or animal vessel, is sometimes precisely what is called for by medical indication.

For example, in order to stem growth of cancerous tissue or of an AVM (arteriovenous malformation) its arterial feeders may be embolized to shut off blood and hence nutrient supply to the cancer nidus in order to so "starve" the cancer.

This medical embolization may be brought about by administering a liquid embolization agent at a desired position in the human body by way of a catheter tube. The embolization agent may be thought of as a volume of glue that effects the occlusion at the diseased position. During such embolization interventions it is pre-eminent to ensure that it is only the targeted arterial feeders that are blocked off but sound vessels are not.

At present the position of emboli is monitored by acquiring one or more fluoroscopic projection images. Because of radiation opacity of the embolus, projective "footprints" are discernible in said fluoroscopic images thereby providing clues to an interventionist radiological about the embolus' whereabouts.

US 7,574,026 describes an imaging method to visualize 3D structures during an intervention.

US 2009/192385 A1 discloses the use of X-ray roadmap fluoroscopy for an endovascular interventional procedure. CT-like image data is obtained, from which a digitally reconstructed radiograph is computed at a projection corresponding to an orientation of a fluoroscopic apparatus; this radiograph is then processed to produce a virtual roadmap mask image.

### SUMMARY OF THE INVENTION

There may therefore be a need for alternative apparatus or system to support medical personnel during embolization or similar interventional procedures.

The object of the present invention is solved by the subject matter of the independent claims where further embodiments are incorporated in the dependent claims. It should be noted that the following described aspect of the invention equally apply to the image processing method, the image processing system, to the computer program element and to the computer readable medium.

According to a first aspect of the invention there is provided an image processing according to claim 1.

The reconstructed 3D image volume element.is then output or made available for further processing at an output port.

The apparatus allows if desired a continuous in time 3D reconstruction of an embolized area in the case of a slow flow of the material volume relative to the image acquisition rate. In one embodiment, the material volume is an embolization agent such as glue or onyx delivered in an embolization procedure at the region of interest such as a vessel shunt. In one embodiment, the images in the two streams are fluoroscopic images acquired by a bi-plane imager whilst the embolus is administered or injected or whilst, after administration, the so delivered embolus solidifies. The apparatus harnesses the slow embolization agent injection rate and uses the notion of temporal activity as a way to match pixel point or patches of pixels in the one later image with the pixels in the other later image so matches across two current fluoroscopic views. Because those pixels or pixel patches were recorded in the two later images at substantially the same time, there is the presumption that they express the same embolus activity. The identified image portions are areas of connected or fragmented pixels. The image portions are "areas of embolus activity" in the sense that they are projection views of a significant embolus configuration change. In one embodiment, identifier uses area size to determine whether the embolus activity is significant. There is the presumption that a significant embolus activity will result in a significant area change the embolus projection views or footprints as recorded by the images for each spatial channel.

According to one embodiment, the identifier operates to establish for each later frame a temporal difference with respect to the respective earlier frame and a temporal activity area detection algorithm is applied. According to one embodiment, the identifier is configured to distinguish between patient-motion-induced temporal differences and differences due to an activity in the imaged material volume for example the addition of further material to the material volume at said region of interest. According to one embodiment, the identifier operates on the two fluoroscopic channels concurrently, thereby affording real-time operation as more and more images come in through the two channels. Other modes of operation are also envisaged where the streams are buffered and identifier operates alternately that is in turns across the two channels. Because the embolus administration or "injection" is slow with respect to the frame rate, the possible addition of material during one frame is spatially limited, impacting only a few pixels in each projection image. In other words, in each of the later images, the embolus activity is then discernible as one or a few a point-wise changes.

This temporal property enables a precise matching of the newly injected material. When the activity area is determined significant, 3D point-wise reconstruction is achieved. The reconstruction may be based on imaging geometry as used by the imager during the acquisition and/or certain material homogeneity assumptions).

The reconstructed volume element ("partial 3D volume") represents an instantaneous change of embolus change of configuration (eg, shape and or volume, etc) at the time when the two later images were taken.

According to one embodiment, the reconstructor is configured to combine said reconstructed instantaneous 3D image volume element and a previously reconstructed 3D volume element to so form a cumulative 3D volume, said cumulative 3D volume representative of the material volume's configuration up to acquisition time of the later projection image. In other words, the reconstructed volume element for of the two identified relatively small image portions ("activity area") may then be compounded in a cumulative 3D volume that represents the full embolized area since the injection started.

According to one embodiment, the apparatus further comprises a graphics display generator configured to generate for display on a screen a graphics display including a view of the reconstructed 3D image volume element, the so generated graphics display when displayed affording a view of only that part of the material volume where the configuration change occurred at acquisition time of the later projection image.

According to one embodiment, the graphics display includes a view of the previously reconstructed image volume element, said previous image volume element reconstructed from a previously identified image portion indicative of a previous change of the material volume's configuration, the so generated view affording at least a partial view of the material volume's configuration up to acquisition time of the later projection image.

According to one embodiment, the generated graphics display includes an overlaid silhouette of a region of interest in the object where the material volume resides.

In other words, as desired by the user, the partial or cumulative volumes may be displayed thereby affording a good 3D view of the currently embolized area or the total area thus far embolized.

According to one embodiment, the apparatus further comprises a synchronizer. Upon failure of the identification operation and upon receipt at the input port of a subsequent first channel image and a subsequent second channel image, the synchronizer is configured to form new pairs of images from the pairs of images by updating the later first channel for the subsequent first channel image and the later second channel image for the subsequent second channel image. The synchronizer thereby maintains in the new pairs the earlier first and second channel images. The reconstructor is configured to execute a further reconstruction operation only if the identifier identifies a respective new image portion in the subsequent first channel image and the subsequent second channel image. The subsequent first and second channel images have a later acquisition time than the later first channel image and the later second channel image, respectively. In one embodiment, the subsequent images are those immediately received at input port after respectively later first channel and second channel image.

As mentioned earlier, according to one embodiment, the identifier operates on image portion size (in number of pixels in the portion) relative to signal-to-noise ratio. A value is formed by a combination of (pixel-)size of the image portion relative to signal-to-noise ratio. The signal-to-noise is taken of the respective image portions in the respective later images relative to a pixel neighborhood around the respective image portions. To establish success or failure of identification, a value is compared against a user-adjustable boundary value.

A significant image portion may be comprised of by a single pixel only if said pixel is recorded at a high contrast relative to its neighborhood so has a high-signal-to-noise ratio. Identification is deemed to have failed if the value for the respective image portion in the subsequent first channel image or in the subsequent second channel image is less than the boundary value. If the value for both image portions is larger than the boundary value, the identification is deemed successful and a change of significant embolus activity or configuration change has been recorded in said two images and the apparatus operates to reconstruct 3D volumes based only on images that record such significant changes.

In other words, identifier in combination with the synchronizer operate to maintain the earlier two images in each channel as reference images for as long as subsequent images, one from each channel, are picked up from the stream that represent a big enough temporal change relative to the reference images. It in only then that reconstructor operates to produce the 3D volume element and reference images are then reset to the two subsequent image and the operation cycle of the apparatus repeats for the newly received images. In yet other words, apparatus "waits" for significant embolus activity and only then reconstructs the volume element based on those pairs that represent that significant change.

The apparatus as proposed herein may be applied in interventional radiology and in particular in interventional neurology. It is envisaged that he above described embodiment in relation to embolization procedure is but one embodiment and that the apparatus can be applied also to record other material flows that share similar flow characteristics and in are relatively slow relative to the imager's acquisition rate.

### Definitions

"Stream" is a sequence of images according to their acquisition time comprising at least two images.

### BRIEF DESCRIPTION OF THE DRAWINGS

Exemplary embodiments of the invention will now be described with reference to the following drawings wherein:
Figure 1 shows an arrangement including an image processing apparatus;
Figure 2 shows a more detailed view of basic components of the image processing apparatus as used in the arrangement in Figure 1;
Figure 3 schematically shows views as output by the image processing apparatus of Figure 2;
Figure 4 shows a flow chart for a method of image processing.

### DETAILED DESCRIPTION OF EMBODIMENTS

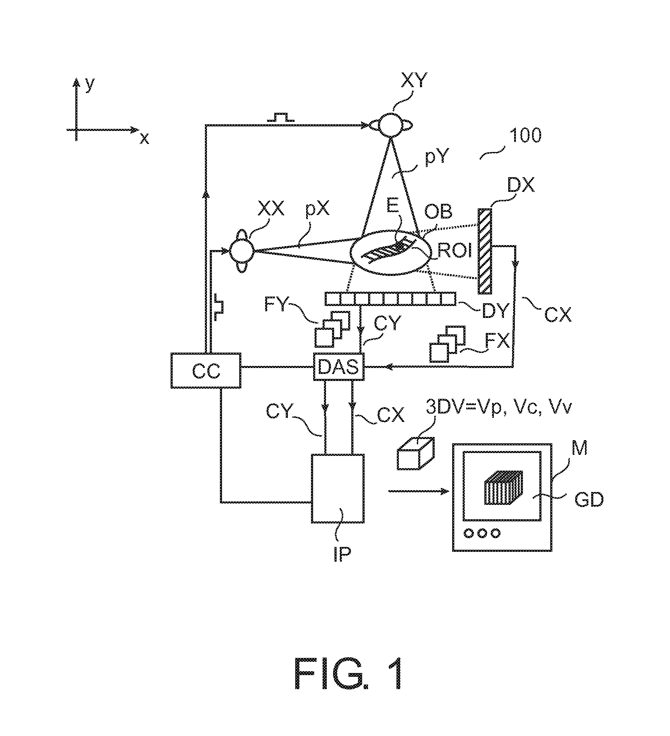

With reference to Figure 1 there is shown an arrangement to support embolization of a region of interest ROI in a patient OB.

Patient OB is deposited on an examination table (not shown). There is a bi-plane imaging system 100 ("imager") including two x-ray sources ("x-ray tubes") XX, XY, each with their respective detector DX, DY. X-rays emanating from either of the x-ray sources XX or XY are detected by respective ones of the detectors DX, DY. The two x-ray tubes XX, XY and their detectors are arranged in a frame (such as a c-arm - not shown). The two x-ray tubes XX, XY are arranged at different angular positions with respect to each other and to the ROI. An exemplary rectangular positioning is shown in Fig 1, but those schooled in the art will appreciate that other angulations such 45° may likewise serve for present purposes.

Angular position of the two x-ray tubes XX, XY (and thus their detectors DX,DY) relative to the ROI and the distance of said ROI (as determined for example by the table height on which the patient is positioned) to either tube XY,XX and detector DX, DY together with other imager setting parameters describing the mutual spatial relationship between i) the two x-ray tubes XX, XY, ii) the respective detectors DX, DY and iii) the ROI are commonly referred to hereinafter as the "imaging geometry".

Initially, a volume of embolization agent (hereinafter referred to as a "blob of glue", "embolus" or simply the "blob") is introduced by a catheter system into the patient OB and is then administered at ROI. Said ROI is for example a shunt of a vessel that needs to be occluded because patient OB needs to undergo AVM, arterioveneous fistula (AVF), or Hemangioma treatment. Examples of liquid embolization materials are Onyx ® (a glue-like substance), alcohol, or n-butyl cyanoacrylate (NBCA).

The catheter, essentially a thin tube, is introduced into the patient for example via the femoral artery and then guided possibly by using a guidewire, to the diseased position. Embolus administration commences at instant t₀ by releasing a volume of embolization agent T via an open tip of said tube near the ROI. Embolus then circulates in the bloodstream until it lodges in at a target position (usually a shunt linking the arterial to the venous systems), thereby occluding the blood vessel.

The imaging geometry is so adjusted and Patient OB is so positioned that x-rays emanating from either tube XY, XX pass through ROI and thus through embolus E or parts thereof as embolus E is residing in patient OB at ROI.

The material of which the embolus E is composed of is such that upon contact with the blood or other ionic substances, a polymerization kicks in so embolus E hardens up and transitions through a number of, at times, highly complex shapes. In other words the embolus undergoes a configuration change in the time period between its initial administration at the target site and when embolus eventually hardens up and lodges in at said site. Embolus' configuration change includes growth in volume as the administration is ongoing but also includes change of embolus' shape that occur even after conclusion of the actual administration. Configuration changes include for example protuberances and sinkages or depressions that occur over time on the embolus' surface as it polymerizes and lodges in at the target position in the vessel. Change of configuration also includes changes in local density and in internal material flow. Change of configuration also includes motion such as translation, contraction, expansion and rotation of the embolus or part or parts of it. For example, a "backflow phenomenon" has been observed according to which embolus E solidifies distally from the catheter's tip upon administration but then tends to progress proximally, possibly occluding unintentionally sound arteries.

The instance t₀ when administration of embolus E commences defines start of the embolization intervention and of the image procedure which will now be described in more detail.

Bi-plane imager 100 is a two channel imager having an X-channel CX and a Y-channel channel CY. Because of their different angular positions around ROI, the respective x-radiation emitted by respective ones of tubes XX, XY are incident on ROI and thus embolus E at different projection directions X, Y.

X-radiation comprises a plurality of x-rays *p*X, *p*Y emitted from tube XX and tube XY, respectively. X-rays *p*X or *p*Y are then detected by respective one of the two detectors DX, DY. Alternatively there may be a single detector which is irradiated in turns by the two tubes XX, XY. In alternative arrangements there is a single X-ray tube with movable focal spot or with two focal spots to realize x-rays *p*X or *p*Y along the two different projection directions X,Y.

As mentioned earlier, ROI with the embolus E is positioned between first x-ray tube XX and its detector DX and between tube XY and its detector DY. Respective x-rays *p*X,*p*Y impact on and interact with matter making up the ROI and embolus E residing in same. When interacting with ROI or embolus E, x-rays *p*X and *p*Y are attenuated. The level of said attenuation is dependent on the densities of material in the respective x-ray's *p*X, *p*Y in-tissue path as they travel through ROI tissue and embolus E.

Each detector DX, DY is made up of a grid of detector cells (not shown). Individual attenuated x-rays *p*X, *p*Y travel along a line and strike certain one of the cells. Each cell responds with issuing an electric signal when attenuated x-ray *p*X or *p*Y strikes said cell. Said electric signals are then converted by a data acquisition system DAS into respective digital pixel values that are consolidated into a 2-dimensional array forming a projection image for any x-ray beam exposure for a given acquisition time. Each projection image is therefore associated with either x-direction tube XX or y-direction tube XY tube and the acquisition time of said projection image. Each recorded pixel value in said projection image is associated with a detector cell and the line or travel of x-ray *p*X or *p*Y that struck that cell. The digital pixel values are each representative of the attenuation level experienced by the respective x-ray *p*X, *p*Y. The images' pixel values therefore record in particular projection views or "footprints" of the embolus E thanks to the high radiation opacity of the embolus material relative to the low opacity of the surrounding ROI or vessel tissue.

During administration of embolus E, imager 100 operates to acquire a stream FX or sequence of fluoroscopic projection images ("frames") FXₜ along the x-direction for x-rays *p*X originating from x-direction tube XX and detected at x-direction detector DX. X channel stream FX is then forwarded along X channel CX to an imaging processor IP whose purpose and operation will be explained in more detail below. In a similar fashion, Y-direction channel stream FY of fluoroscopic projection images FYₜ is acquired for x-rays *p*Y originating from y-direction tube XY and detected at y-direction detector DY. Y-direction stream FY is likewise forwarded to said image processor IP via Y-direction channel CY. The two image streams FX, FY are then received by a suitable input port IU at said image processor IP.

At any one time t during the stream acquisitions, an X-channel image FXt and a y-channel image FYt is acquired substantially concurrently. In practice however there still is a small temporal offset t_{Δ} between the two because acquiring at the very same time would result in Compton scatter of one channel distort the image acquisition in the other channel thereby reducing the signal to noise ratio. However, because of the assumed slow embolus E dynamics the said cross-channel offset is negligible and for present purposes images FXₜ and FYₜ are treated by processor IP as concurrently acquired.

The operation of the imaging system is controlled by a central computer console CC. From here the respective refreshing signals (also known as frame rate, measured in "fps" or "frames per second") for the two channels are triggered either according to a pre-set imaging protocol and/or are manually triggered by the radiologist who may use a joy stick or a pedal or similar input device to trigger ("shoot") an exposure.

Upon receipt of two pairs of projection images, one pair from each channel CX, CY, image processor IP processes said two pairs into a 3D image volume 3DV. Said 3D volume 3DV may then be used by suitable rendering software to produce views of the embolized ROI and said view may be displayed on screen M during the intervention. Said volume may be produced as partial view only encoding an instantaneous embolus E configuration change at a certain positions or a total view encoding the total ROI volume that has been embolized throughout the period from t₀ up to the considered instance t.

Broadly speaking, said 3D volume 3DV is conditionally updated upon receipt of new first and second channel frames so the updated 3D volume 3DV follows the evolution embolus' configuration change. The condition safeguards that an update occurs only if information in the new image pairs are significant enough and in fact are evidence of a configuration change of the embolus itself rather than of the patient OB or the ROI tissue. Image processor IP as proposed herein affords to the interventional radiologist a good view of the embolized area throughout the embolization procedure. This is achieved by an, if required, ongoing and repeated real-time point-wise 3D reconstruction of the embolization area from two quasi-simultaneous live projection views only. Image processor IP harnesses the spatially limited embolus dynamics and uses the notion of temporal activity as a way to match relatively small and concentrated pixel areas in the x channel images with counterpart pixel areas in the y-channel images. Only after a match-up is identified, the point-wise 3D reconstruction is then carried out based only on the matched up pixel areas. The point-wise reconstruction results over time in 3D volume elements that are either separately recorded for the partial volume view or are compounded into a 3D cumulative total view on the embolized area since the beginning of the intervention.

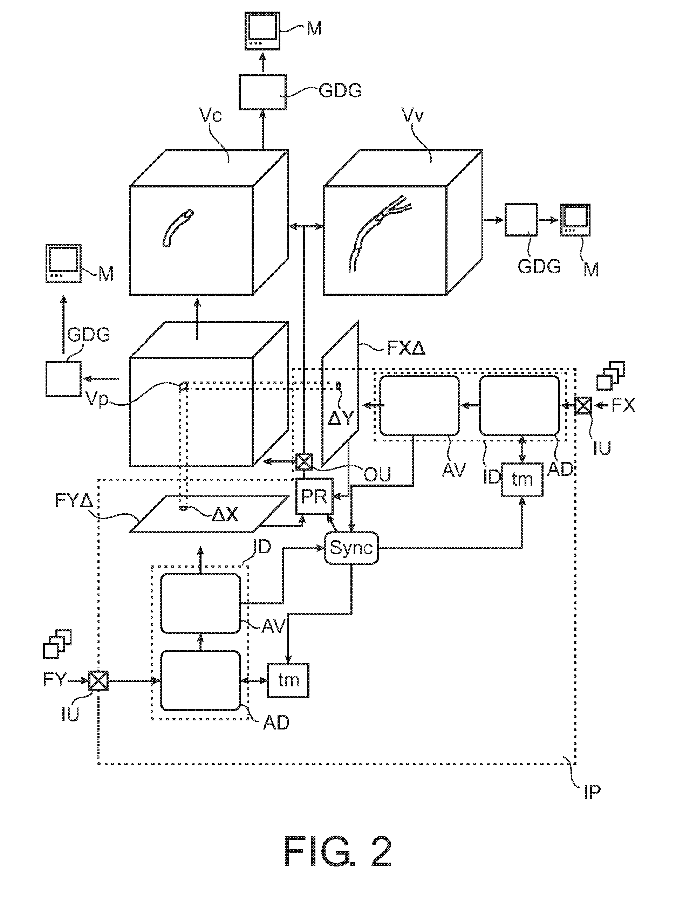

With reference to Figure 2 the operation of image processor IP will now be explained in more detail.

### Operation

Image processor includes input port IU, an identifier ID, a synchronizer SYNC, a 3D reconstructor and an output port OU. Imager 100 operates to supply the two image streams FX,FY at a frame rate fast enough for the dynamics of the embolus E's configuration change. "Fast enough" is taken to mean that pixel information in any two consecutive images in either stream may be next to identical. This is to ensure that no embolus configuration change passes undetected.

A pair of subsequent x-channel images, that is, an earlier image FXₜ₁ and a later image FXₜ₂ (t1<t2) is received at input port IU. The later image FXₜ₂ may or may not be the immediate next image to the earlier image FXₜ₁ as supplied in the stream FX at rate fmps by imager 100. Similarly, ay-channel pair of an earlier y-channel image FYₜ₁ and a later y-channel image FYₜ₂ is received at input interface IU. As the notion used herein suggests, the y-channel acquisition t1, t2 are substantially the same as for the x-channel images. As indicted in Fig 1, the pairs are respectively fed via x-channel CX and y-channel CY into input port IU but this is merely one embodiment. A single feed-line for both streams FX, FY may be used instead. In this embodiment, input interface IU scans each image for whether it is an x-channel stream or a y-channel stream to so resolve images in the feeder line into the two streams. The received x-channel and y-channel pairs may then be stored into a suitable date structure and arranged according to their respective acquisition times and their origin, that is, whether they are an x-channel or y-channel image.

The two pairs FXₜ₁, FXₜ₂ and FYₜ₁, FYₜ₂ are then forwarded to an identifier ID or tracker. Identifier module ID is configured to identify or track embolus configuration changes as evidenced by changes of pixel patterns between earlier and later image in each pair FXₜ₁, FXt₂ and FYₜ₁, FYₜ₂. According to one embodiment there is arranged a single identifier ID that processes both pairs. In an alternative embodiment there is a dedicated identifier ID of tracker for each pair or stream FX, FY.

Operation of identifier ID will now be explained for x-channel pair FXₜ₁, FXₜ₂ but it is understood that identifier ID operates in a completely analogous manner on y-channel pair FYₜ₁, FYₜ₂.

According to one embodiment, identifier ID operates in 2 phases and comprises two modules, one for each phase, an activity area detector AD and an activity area validator AV.

When identifier ID is in detection phase, activity area detector AD operates to compute pixel-wise a temporal difference FXΔ= FXₜ₁ - FXₜ₂ between the most recent x-channel image FXₜ₂ and the previous, earlier image FXₜ₁. Synchronizer SYNC sets acquisition time t1 of the earlier image FXₜ₁ (and of the earlier image FYₜ₁) as a reference time t1=tₘ, and said earlier image FXₜ₁ is now, for the time being, a reference or "mask" image for the x-channel images and earlier image FYₜ₁ serves an analogous purpose for the y-channel images. Image areas in the later image FX₂ are thereby determinable and discernible relative to reference mask image that represent a temporal difference response compared to the earlier image FXₜ and similar image areas are determinable in later y-channel image FYₜ₂.

According to one embodiment, Activity area detector AD comprises a number or filter modules to remove temporal difference responses that are not due to the embolization activity. Activity area detector AD filter modules include each or a selection of the following:
- a noise filterer for removing or reducing difference peaks due to noise.
- a motion artifact filter for removing difference responses due to patient OB motion.
- a device filter operates to remove device-induced responses in the difference image by using device segmentation and "wiping out" the footprint of device for example the catheter tube through which the embolization agent is delivered.
According to one embodiment, the motion artifact filter is applied first and then noise filter and finally the device filter. Other permutations are also envisaged.

According to one embodiment the filters are applied to each of image FXₜ₂, FX₂ prior to computing x-channel temporal difference image FXΔ or FXΔ is computed first and the filters are then applied to said difference image FXΔ.

Activity area detector AD operates in a similar fashion to produce a filtered temporal difference image FYΔ for the y-channel pair FYₜ₁, FYₜ₂ images.

Both temporal difference images FYΔ, FXΔ are then forwarded to activity area validator AV and operation of identifier ID thereby enters phase two. Activity area validator AV operates to analyze connected pixel components in each temporal difference image FYΔ, FXΔ that remain after the various filtering steps. According to one embodiment, activity area validator AV computes for each of FYΔ, FXΔ the size of areas of non-zero pixels and the signal-to-noise ratio in FYΔ, FXΔ relative to said size (measured for example in number of pixels comprised by said non-zero pixels) of area. An isotropic filter can be used. This information is combined for example as weighted average into value. Any pixel that has been filtered out has been set to zero. If said value of the remaining pixels is determined larger than a boundary value the image portion is deemed significant and are then considered areas of activity XΔ, YΔ. In this case, validation is said to have succeeded. The boundary value may be established in calibration runs. In other words, the connected image portions XΔ, YΔ as output by identifier ID are assumed representative of only an embolus activity that is significant enough to warrant a reconstruction and are considered projection views of a configuration change in space or shape of the embolus at acquisition time t of the later images FXₜ₂, FYₜ₂. The so identified pixel components XΔ, YΔ are retained as suitable candidates for point-wise reconstruction.

The above mentioned boundary values are either-preset or are dynamically adjustable during operation. They can be established in calibration runs but can also be estimated a-priori because the slow dynamic flow characteristics of the embolization agent is assumed to be known. Ambient patient conditions such as body-temperature at the ROI may need to be taken in consideration.

According to one embodiment, 3D reconstructor PR is instructed to operate only if validator AV has successfully validated activity areas XΔ, YΔ for both channels CX, CY, that is, if both areas are larger than the lower boundary mentioned above. If not, that is, if at least one of XΔ, YΔ is less said lower boundary, both later images FXₜ₂, FYₜ₂ are rejected and are no longer considered any further. IP processer then listens at input port IU for two new later images FXₜ₃, FYₜ₃ and the above described procedure is repeated with two new pairs, a new x-channel pair FXₜₘ₌ₜ₁, FXₜ₃ and a new y-channel pair FYₜₘ₌ₜ₁, FYₜ₃. So the later images are updated and the earlier reference mask images FXₜₘ₌ₜ₁, FYₜₘ₌ₜ₁ are retained. If however, XΔ, YΔ are successfully validated, point -wise reconstruction is triggered as will be explained in more detail below and synchronizer resets the mask image instance tm=t2, so the two later images FXₜ₂, FYₜ₂ become the two new reference mask images FXₜₘ₌ₜ₂, FYₜₘ₌ₜ₂. New pairs are then formed in turn for any two newly received x-channel and y-channel images, respectively and a cycle commences until the next successful validation occurs. The instances t1,t2, t3 may be consecutive acquisition times (so t2 follow immediately on t1, etc) in the respective streams as supplied by the imager 100 so imager 100 operates on each image in two streams. However other modes are envisaged where image processor IP effectively "leapfrogs" a few frames.

According to one embodiment, the refresh instances tₘ for the mask images are dynamically adapted and is a function of whether validation in both channels has been achieved by activity area validator AV. There is a feedback from activity area validator AV to synchronizer SYNC and if validation has been achieved, the refreshing instance is reset as described in the previous paragraph. So the operation of validator AV in conjunction with synchronizer SYNC effectively picks up from the two supplied streams the right instances tₘ when reconstruction should be triggered to make sure it only significant embolus configuration changes that are recorded in the image volume reconstructed by reconstructor PR. If activity area validator AV does not validate successfully, the embolus dynamics is too slow compared to the refreshing rate and IP processor waits for the next x-channel and y-channel images until a significant enough embolus activity is found in both channels relative to the currently held reference mask images FXₜₘ, FYₜₘ. The refreshing of reference time tₘ insures that a substantial temporal difference can be monitored whilst the changes in the time interval between tm and the acquisition time of the considered later images FYₜₘ₊ₖ FXₜₘ₊ₖ due to embolization activity remains spatially limited to so ensure accuracy of the subsequent 3D volume reconstruction.

In other words, the same mask image FXₜₘ, FYₜₘ may be used for a number of subsequent activity area XΔ, YΔ identifications provided validation can be achieved. In yet other words, given current mask images FXₜₘ FYₜₘ, a "time gap" between tm and acquisition times t=tm+k for each later image FXₜₘ₊ₖ FYₜₘ₊ₖ keeps growing with time t=1,2, 3 until validation succeeds at which instance tm refreshes and newly received images are then declared as new mask images and the cycle repeats as new later images are received and respective pairs are considered as previously described. In yet other words, for each channel CX, CY the mask images FXₜₘ FYₜₘ remain the same for each newly received later image FXₜₘ₊ₖ FYₜₘ₊ₖk=1,2,... unless validation succeeds at tm+k'. It is only upon a successful validation that image processor IP changes over to a new pair of mask images FX_{tm_new} FY_{tm_new.}, tm_new= tm+k'.

The x-channel and y-channel activity areas XΔ, YΔ are then forwarded from identifier ID to volume image re-constructor PR.

According to one embodiment operation of volume image re-constructor PR is two-stage and point-wise. Re-constructor PR operates point-wise because it uses only the two identified activity areas XΔ, YΔ to reconstruct one or more3D image volume elements ("voxel") that are indicative only of embolus E's configuration changes that occurred at certain position at acquistion time of the respective later images FXₜₘ₊ₖ FYₜₘ₊ₖ that were used by the identifier to identify the instant activity areas XΔ, YΔ. A voxel is defined by a value and a position coordinate. Corresponding to the mathematical sign (+/-) of the pixel values making up the activity areas XΔ, YΔ, the value of the reconstructed volume element is either positive or negative, so indicates either accrual of matter at the respective acquisition time tm+k and position on the embolus or a depletion of matter at said time and position. The reconstructed voxel is either a binary volume element or a density volume element. The value of a binary volume element is either "1" or "0", indicating whether embolus matter is or is not present at said position at said time. A density volume element provides more information as its value is related to the density of embolus at said position at said time. The reconstructed volume is either a partial volume Vp, one for each time instance or a cumulative volume Vc for any given time instance including 3D information of the total embolized area up to a certain time since the latest instance tm of mask image refreshing.

A 3D volume is essentially a 3D scalar field. Initially, re-constructor PR uses a three dimensional grid point data structure. Each grid point represents a position within the ROI including the embolus. When operating to reconstruct a binary partial volume Vp for an instance tm+k, point-wise reconstruction can be realized by relying on the imaging geometry. According to one embodiment, the line of travels associated with respective pixels in x-direction activity area XΔ is intersected with the line of travels associated with respective pixels in y-direction activity area YΔ. The so identified grid position is then populated with either 0 or 1. Once a new point-wise reconstruction is achieved it is placed at a respective that grid point in a new grid. The volume elements by be positive or negative to so account for the fact that matter at any point and instance may alternately accrue or deplete. According to a further embodiment, instead of or in addition to imaging geometry, the Vp computation relies on radiometry. Assuming local density homogeneity of embolus E agent at a small local scale, pixels can be matched up between the activity areas XΔ, YΔ based on similar pixel values. Pixels with similar values in each of activity areas XΔ, YΔ are assumed footprints of one and the same embolus position. If a density volume element is desired, reconstructor operates on binary voxel with value 1 only. Re-constructor PR then uses an attenuation model for the embolus to establish the value of the voxel at said grid position indicative to the attenuation or density as evidenced from pixel values in the matched up activity areas XΔ, YΔ. In same case one or both activity areas XΔ, YΔ may comprise precisely one pixel. The two pixels are then correspond to one voxel when reconstructed. One or both of activity areas XΔ, YΔ may be made up of a blob or patch of pixels, that is, comprises a group of pixels. In this case the reconstructor collapses said group into an elementary form shape which may be spherical or elliptical. The frame rate of imager 100 is assumed fast enough so that said activity areas XΔ, YΔ are always less than the number of pixels which can be collapsed into said elementary shapes to so ensure that point-wise-reconstruction can be carried out. Typically the group size is the order of a couple of pixels. In case of fragmented patches, the point-wise reconstruction is carried out separately for each of the connected pixel areas of which the fragmentation is made up.

In this manner point-wise reconstructor PR populates a different grid each time a new pair of validated activity areas is received. In other words a family of partial volumes Vp one for each instance is constructed and stored in a look-up data structure.

According to one embodiment, when there are several pixels making up each of the activity areas XΔ, YΔ, XΔ pixels or "blobs of pixels" are matched to YΔ pixels or blobs to establish which pixels or blobs correspond to projection views of one and the same volume element to be point-wisely reconstructed. To achieve said pixel matching, reconstructor PR is configured to combine one or several of the following information:
- "Resemblance of radiometry values", which indicates that same elementary spherical object which are used for the point-wise reconstruction correspond to a matching pair of pixels or "blobs" of pixels. If, at the elementary reconstruction model level, an ellipse-shape model is assumed, the radiometry might be slightly different in each projection channel, but still rather similar. Therefore, radiometry similarity is indicative of good matching.
- "Geometrical correspondence", which can be estimated by the distance between the pair of associated retro-projected 3D lines constructed from the planar locations of the pair of considered pixels or blobs and from the system geometry. In principle, two matching instances must correspond to intersecting retro-projected 3D lines in space. Inter-retro-projected-line-distance is therefore indicative of good matching.
- "Feature similarity", which is estimated after the analysis of the image features around a pair of considered pixels or blobs in their respective projection images by comparing those features, can also be indicative of a good match up. For instance, if a part of embolus E lies in 3D very close to a bone edge, the two projections of that blob in channel ΔX, ΔY will also reveal the presence of a projected bone contour close the considered blob. Feature-likeliness therefore reinforces the presumption of a good match. However, feature dissimilarity cannot be safely interpreted since, in projection views, the respective pixel blobs' proximity to a contour is merely an apparent one, whereas said embolus part lies distal to said contour in 3D.

By adding up or accumulating the plurality of partial volumes Vp the cumulative 3D Volume Vc can be re-constructed. Cumulative volume Vc records the total embolization result since the intervention start. When adding up the partial volumes, each grid is populated with the latest available voxel value as can be looked-up from the respective partial volume Vp associated with the desired instance When scrolling to and fro in time through the various cumulative volumes Vc, the positive or negative values of the respective volume elements as recorded in the partial volumes Vp effect that at certain grid points in the cumulative volume Vc, the voxel may appear and reappear in accord with the sign +/- of the volume element added at any one time.

According to one embodiment the accumulative volume VC is forwarded to a renderer or graphics display generator GDG to render a selected one or ones of said volumes along a desired view for display on screen M.

According to one other embodiment, image processor IP operates to output either one of the previously described volumes Vp and Vc with the vessel visualized by a road map overlay. Said road map is an outline or silhouette of the vessel where the embolus E is situated. Said overlay can be extracted by otherwise known means for example from a 3D volume reconstruction of the considered vasculature Va produced in a peri-interventional C-arm-CT reconstruction procedure. The so obtained road map graphics can then be overlaid after registration on the respective views obtained from the 3D image volumes Vc and/or Vp to so obtained a roadmap volume Vv.

Image processor IP may also operate to implement further visualization schemes by colour-coding any one or a combination of the currently point-wise embolized area Vp, the total embolized area since the intervention start as recorded in volume Vc, and/or the overlaid vasculature roadmap Vv.

According to one embodiment acquisition of the two streams FX, FY of images are maintained and image processor IP continues to operate on same even after conclusion of the actual administration of the complete volume of embolization agent in order to monitor the embolus' configuration throughout the final stages of its polymerization. The imaging procedure continues until the radiologist is satisfied that embolus E has indeed safely lodged in at the target site.

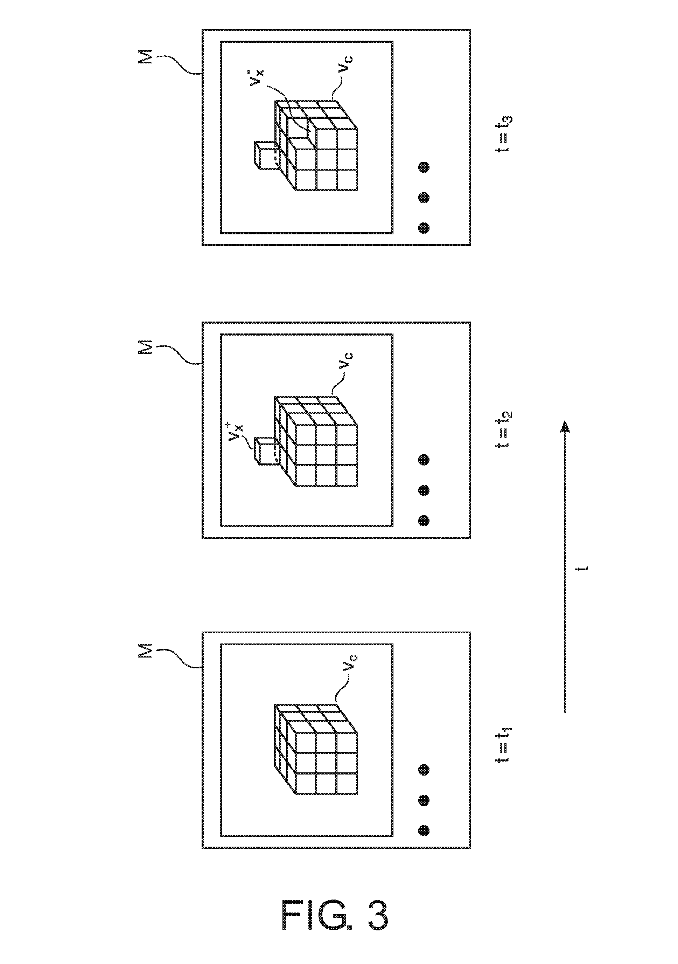

With reference to Figure 3 there is shown a sequence of highly schematized views of cumulative volume Vc. At t=t₁, an initial view of accumulated volume Vc is shown. The embolus E is shown highly schematized as a discretized cube composed of the various sub-cubes each representing a 3D voxel element previously computed as described above.

At a later time instant t= t₂ embolus E forms a protuberance and this fact is recorded as a new voxel element V⁺ₓ which is added to volume Vc at a position where at previous time t=t1 there was no matter situated.

At a yet later time instant t=t3, the opposite event occurs, that is, a surface portion of embolus "caves in" or collapses and a local sinkage or depression is formed so matter depletes at this position. This fact is recorded by adding a negative voxel element V⁻ₓ to "white out" the previous positive voxel element at said position. The sequence of cumulative volumes Vc at t₁-t₃ shows the evolution of the embolus E's configuration change such as change in shape during the intervention thereby allowing the interventional radiologist to monitor whether the embolization evolves as planned and concludes successfully.

According to one embodiment the different volume types produced by image processor IP may not necessarily be displayed themselves. Instead or additionally to displaying same, statistical indicia such the instantaneous mean diameter can be measured and output versus time thereby providing yet another visualization means for the evolution of the embolus.

The application of image processor IP to support embolization procedures is merely one embodiment and other applications are envisaged. For example the material volume is not necessarily a quantity of embolization agent but may be instead a dye or contrast agent that propagates through the vessels and the projection images are then angiograms. In a an angiographic setting, the proposed image processor IP would allow tracking the spread of a volume of contrast agent through a vasculature and the computed volumes allow monitoring how said vasculature is gradually filled up over time by said contrast agent. IP imager may also be used to track a naturally occurring embolus.

Although in Fig 1 all components or image processor IP are shown to reside on same, this is merely one embodiment. In other embodiments a distributed architecture is used with the components connected in a suitable communication network among each other and with imager 100. Image processor IP can be used as an add-on for existing bi-plane or other at least two channel imagers. According to one embodiment, image processor IP may be arranged as a dedicated FPGA or as hardwired standalone chip or may run as module on console CC. Image processor IP may be programmed in a suitable scientific computing platform such as Matlab® or Simulink® and then translated into C++ or C routines maintained in a library and linked when called on by central operation console CC.

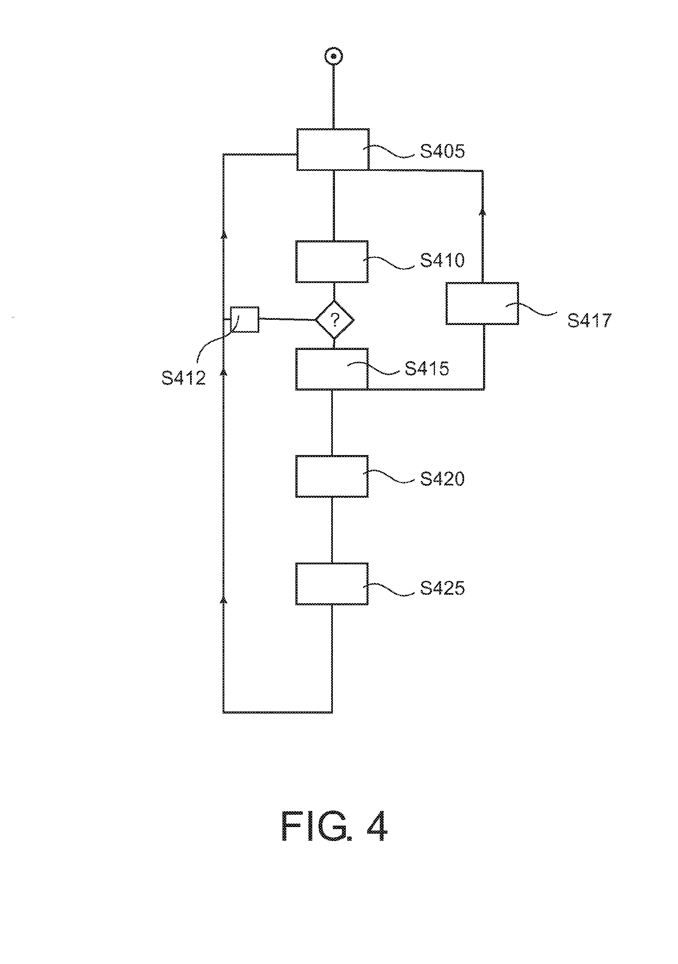

With reference to Figure 4, steps of the method implemented by image processor IP are shown in a flow chart.

At step S405 two streams of projection images of a region of interest ROI of an object are received via respective channels CX and CY from the at least two-channel imager. The respective streams of projection images are obtained at different projection directions. Each stream incudes at least one pair of images and each pair comprises a respective earlier acquired image and a later acquired image. The images are acquired whilst an embolus or parts thereof resides at the ROI and said embolus is capable of changing its configuration for example, the embolus' position or shape.

At step S410, for each pair, an image portion is identified in the respective later image using the respective earlier image as a reference mask image to form a respective difference image. According to one embodiment, the identification step includes a validation step. If said validation step is successful in each channel, the identification is deemed successful and the respective image portions are considered representative and solely indicative of an embolus activity, that is, of said change of configuration. Each portion represents a respective "footprint" or projection view of the configuration change. If identification is successful in each channel, the two later images are then reset in step S417 as new reference mask images, and the previous step S410 is then repeated upon receipt of two new images for each channel, each pair now formed by the newly set reference image mask images and the respective new image corresponding to the channel. If validation is not successful, that is if it fails for at least one of the portions, the two current reference mask images are retained in the pairs and each of the two later images is replaced S412 by newly received subsequent images from the corresponding channel and step S410 is repeated for this updated pair. To establish success or failure of identification at step S410, a value is compared against a user-adjustable boundary value. The value is formed by a combination of (pixel-)size of the image portion relative to signal-to-noise ratio. The signal-to-noise is taken of the respective image portions in the respective later images relative to a pixel neighborhood around the respective image portions.

Only if said identification is successful, a point-wise reconstruction in step S415 is carried out of a 3D volume element which relates only to the successfully identified image portions. In step S420 the so reconstructed 3D volume element is output for example stored in a suitable date structure on a memory.

In an optional step S425 said output 3D volume element is displayed either in isolation as a partial volume or said element is combined in a cumulative volume with at least one previous point-wisely reconstructed 3D image element for said embolus. Optionally a roadmap graphics element or silhouette outlining a view of the ROI's contours is overlaid for display on said partial or cumulative volume. Instead of or in addition to displaying said volumes, measurement values are taken based on the reconstructed volume element or elements said values describing for example a size or other quantitative indicia of said embolus.

The above steps are then repeated and the two image streams are so processed according to above steps including at least steps S410-S415, thereby building up and recording over time a sequence or 3D volume elements that follow the evolution of the embolus' configuration change.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. An image processing apparatus, comprising:
an input unit (IU) for receiving from a first channel (CX) a stream (FX) of projection images of an object (OB) acquired along a first projection direction and from a second channel (CY) a stream (FY) of projection images of the object (OB) acquired along a second projection direction, the images in both channels (CX, CY) acquired whilst a volume (E) of material is resident in the object (OB) and whilst said material volume (E) undergoes a configuration change;
an identifier (ID) configured to identify, based on i) a pair of an earlier first channel image and a later first channel image and on ii) a pair of an earlier second channel image and a later second channel image, image portions (ΔX,ΔY), one (ΔX) in the later first channel image and one (ΔY) in the later second channel image, said image portions (ΔX,ΔY) indicative of the material volume (E)'s configuration change and indicative to a position where in the material volume said change occurred;
a 3D image reconstructor (PR) configured to reconstruct, only upon the identifier (ID) successfully identifying said image portions, from the identified image portions (ΔX,ΔY) a 3D image volume element, the so reconstructed 3D image volume element representative only of said identified image portions (ΔX,ΔY); and
an output port (OU) configured to output the reconstructed 3D image volume element.

2. An image processing apparatus of any one of claim 1, wherein the reconstructor (PR) is configured to combine said reconstructed 3D image volume element and a previously reconstructed 3D volume element to so form a cumulative 3D volume (Vc), said cumulative 3D volume representative of the material volume's configuration up to acquisition time of the later projection image.

3. An image processing apparatus of claim 1, further comprising:
a graphics display generator (GDG) configured to generate for display on a screen a graphics display including a view of the reconstructed 3D image volume element, the so generated graphics display (GD) when displayed affording a view of only that part of the material volume where the configuration change occurred at acquisition time of the later projection image.

4. An image processing apparatus of claim 2, wherein the graphics display (GD) includes a view of the previously reconstructed image volume element, said previous image volume element reconstructed from a previously identified image portion indicative of a previous change of the material volume (E)'s configuration, the so generated view affording at least a partial view of the material volume's configuration up to acquisition time of the later projection image.

5. An image processing apparatus of claim 3 or 4, wherein the generated graphics display includes an overlaid silhouette of a region of interest (ROI) in the object (OB) where the material volume (E) resides.

6. An image processing apparatus of any one of claims 1-5, further comprising a synchronizer (SYNC), wherein upon failure of the identification operation and upon receipt at the input port (IU) of a subsequent first channel image and a subsequent second channel image, the synchronizer (SYNC) configured to form new pairs of images from the pairs of images by updating the later first channel for the subsequent first channel image and the later second channel image for the subsequent second channel image, the synchronizer (SYNC) thereby configured to maintain in the new pairs the earlier first and second channel images.

7. An image processing apparatus of claim 6, wherein the identification operation fails if a size and/or signal-to-noise ratio of at least one of the respective image portion in the subsequent first channel image or in the subsequent second channel image is less than a boundary value, and
wherein the identification operation is successful if the size and/or signal-to-noise ratio of both, the image portion in the subsequent first channel image and the image portion in the subsequent second channel image is larger than the boundary value.

8. An image processing apparatus of any one of claims 1-7, wherein the projection images are fluoroscopic images.

9. An image processing apparatus of any one of claims 1-8, where the object is a part of a human or animal vasculature and the material volume is a quantity of embolization agent.

10. Method of image processing, comprising the steps of:
receiving (S405) from a first channel a stream of projection images of an object (OB) acquired along a first projection direction and from a second channel a stream of projection images of the object (OB) acquired along a second projection direction, the images in both channels acquired whilst a volume of material is resident in the object and whilst said material volume undergoes a configuration change;
identifying (S410), based on i) a pair of an earlier first channel image and a later first channel image and on ii) a pair of an earlier second channel image and a later second channel image, image portions, one in the later first channel image and one in the later second channel image, said image portions indicative of the material volume's configuration change and indicative to a position where in the material volume said change occurred;
only upon successfully identifying said image portions, reconstructing (S415) from the identified image portions a 3D image volume element, the so reconstructed 3D image volume element representative only of said identified image portions; and
outputting (S420) the reconstructed 3D image volume element.

11. Method of claim 10, wherein,
i) if the identification is successful and upon receiving a subsequent first channel image and a subsequent second channel image, forming new pairs of images from the pairs of images by updating (S417) the earlier first channel image for the later first channel image and replacing the later first channel image by the subsequent first channel image and by updating the earlier second channel image for the later second channel image and replacing the later second channel image by the subsequent second channel image, and then repeating the identification step based on said two new pairs, and wherein
ii) if the identification fails and upon receiving a subsequent first channel image and a subsequent second channel image, forming new pairs of images from the pairs of images by updating (S412) the later first channel for the subsequent first channel image and the later second channel image for the subsequent second channel image, thereby maintaining the earlier first and second channel images, and then repeating the identification step based on said two new pairs.

12. Method of claim 11, wherein the step of identifying the two image portions results in a failure if a size and/or signal-to-noise ratio of at least one of the image portion in the subsequent first channel image or of the image portion in the subsequent second channel image is less than a size boundary value, and
wherein the identification step is successful if the size and/or signal-to-noise ratio of both, the image portion in the subsequent first channel image and the image portion in the subsequent second channel image is larger than the boundary value.

13. An image processing system comprising:
an apparatus of any one of previous claims 1-9;
an at least 2-channel x-ray imager (100) supplying the two streams;
a screen (M).

14. An image processing system of claim 13 wherein the x-ray imager is a bi-plane fluoroscope.

15. A computer program element for controlling an apparatus according to any one of claims 1-9, which, when being executed by a processing unit is adapted to perform the method steps of claims 10-12.

16. A computer readable medium having stored thereon the program element of claim 15.

## Patentansprüche

1. Bildverarbeitungsvorrichtung, umfassend:
eine Eingabeeinheit (IU), um von einem ersten Kanal (CX) einen Strom (FX) von, entlang einer ersten Projektionsrichtung aufgenommenen Projektionsbildern eines Objekts (OB) und von einem zweiten Kanal (CY) einen Strom (FY) von, entlang einer zweiten Projektionsebene aufgenommenen Projektionsbildern des Objekts (OB) zu empfangen, wobei die Bilder in beiden Kanälen (CX, CY) aufgenommen werden, während ein Volumen (E) an Material in dem Objekt (OB) vorhanden ist und während das Materialvolumen (E) eine Konfigurationsänderung erfährt;
einen Identifier (ID), der so eingerichtet ist, dass er, basierend auf i) einem Paar eines früheren ersten Kanalbildes und eines späteren ersten Kanalbildes sowie auf ii) einem Paar eines früheren zweiten Kanalbildes und eines späteren zweiten Kanalbildes, Bildteile (ΔX,ΔY), einer (ΔX) in dem späteren ersten Kanalbild und einer (ΔY) in dem späteren zweiten Kanalbild, identifiziert, wobei die Bildteile (ΔX,ΔY) für die Konfigurationsänderung des Materialvolumens (E) sowie für eine Position, wo in dem Materialvolumen die Änderung stattfand, bezeichnend sind;
eine 3D-Bildrekonstruktionseinrichtung (PR), die so eingerichtet ist, dass sie, erst nachdem der Identifier (ID) die Bildteile erfolgreich identifiziert hat, aus den identifizierten Bildteilen (ΔX,ΔY) ein 3D-Bildvolumenelement rekonstruiert, wobei das so rekonstruierte 3D-Bildvolumenelement nur für die identifizierten Bildteile (ΔX,ΔY) repräsentativ ist; sowie
einen Ausgangsport (OU), der so ausgeführt ist, dass er das rekonstruierte 3D-Bildvolumenelement ausgibt.

2. Bildverarbeitungsvorrichtung nach Anspruch 1, wobei die Bildrekonstruktionseinrichtung (PR) so eingerichtet ist, dass sie das rekonstruierte 3D-Bildvolumenelement und ein zuvor rekonstruiertes 3D-Volumenelement kombiniert, um ein kumulatives 3D-Volumen (Vc) zu erzeugen, wobei das kumulative 3D-Volumen für die Konfiguration des Materialvolumens bis zur Aufnahmezeit des späteren Projektionsbildes repräsentativ ist.

3. Bildverarbeitungsvorrichtung nach Anspruch 1, die weiterhin umfasst:
einen Grafikanzeigegenerator (GDG), der so eingerichtet ist, dass er zur Darstellung auf einem Bildschirm eine Grafikanzeige mit einer Ansicht des rekonstruierten 3D-Bildvolumenelements erzeugt, wobei die so erzeugte Grafikanzeige (GD) bei Darstellung eine Ansicht von nur dem Teil des Materialvolumens bietet, wo die Konfigurationsänderung zur Aufnahmezeit des späteren Projektionsbildes stattfand.

4. Bildverarbeitungsvorrichtung nach Anspruch 2, wobei die Grafikanzeige (GD) eine Ansicht des zuvor rekonstruierten Bildvolumenelements enthält, wobei das aus einem zuvor identifizierten Bildteil rekonstruierte vorherige Bildvolumenelement auf eine vorherige Änderung der Konfiguration des Materialvolumens (E) schließen lässt, wobei die so erzeugte Ansicht zumindest eine Teilansicht der Konfiguration des Materialvolumens bis zur Aufnahmezeit des späteren Projektionsbildes bietet.

5. Bildverarbeitungsvorrichtung nach Anspruch 3 oder 4, wobei die erzeugte Grafikanzeige eine überlagerte Silhouette eines Bereichs von Interesse (ROI) in dem Objekt (OB), wo das Materialvolumen (E) vorhanden ist, enthält.

6. Bildverarbeitungsvorrichtung nach einem der Ansprüche 1-5, die weiterhin einen Synchronisator (SYNC) umfasst, wobei bei Ausfall des Identifikationsbetriebs und Empfang eines nachfolgenden ersten Kanalbildes und eines nachfolgenden zweiten Kanalbildes an dem Eingangsport (IU) der Synchronisator (SYNC) so eingerichtet ist, dass er durch Aktualisieren des späteren ersten Kanalbildes für das nachfolgende erste Kanalbild und des späteren zweiten Kanalbildes für das nachfolgende zweite Kanalbild aus den Bildpaaren neue Bildpaare bildet, wobei der Synchronisator (SYNC) dadurch so eingerichtet ist, dass er in den neuen Paaren das frühere erste und zweite Kanalbild aufrechterhält.

7. Bildverarbeitungsvorrichtung nach Anspruch 6, wobei der Identifikationsbetrieb ausfällt, wenn eine Größe und/oder ein Signal-Rausch-Verhältnis von mindestens einem des jeweiligen Bildteils in dem nachfolgenden ersten Kanalbild oder in dem nachfolgenden zweiten Kanalbild geringer als ein Grenzwert ist, und
wobei der Identifikationsbetrieb erfolgreich ist, wenn die Größe und/oder das Signal-Rausch-Verhältnis von beiden, dem Bildteil in dem nachfolgenden ersten Kanalbild und dem Bildteil in dem nachfolgenden zweiten Kanalbild, größer als der Grenzwert sind/ist.

8. Bildverarbeitungsvorrichtung nach einem der Ansprüche 1-7, wobei die Projektionsbilder fluoroskopische Bilder sind.

9. Bildverarbeitungsvorrichtung nach einem der Ansprüche 1-8, wobei das Objekt ein Teil einer Gefäßanordnung eines Menschen oder Tieres ist und das Materialvolumen eine Menge eines Embolisierungsmittels ist.

10. Verfahren zur Bildverarbeitung, das die folgenden Schritte umfasst, wonach:
von einem ersten Kanal ein Strom von, entlang einer ersten Projektionsrichtung aufgenommenen Projektionsbildern eines Objekts (OB) und von einem zweiten Kanal einen Strom von, entlang einer zweiten Projektionsebene aufgenommenen Projektionsbildern des Objekts (OB) empfangen wird (S405), wobei die Bilder in beiden Kanälen aufgenommen werden, während ein Volumen an Material in dem Objekt vorhanden ist und während das Materialvolumen eine Konfigurationsänderung erfährt;
basierend auf i) einem Paar eines früheren ersten Kanalbildes und eines späteren ersten Kanalbildes sowie auf ii) einem Paar eines früheren zweiten Kanalbildes und eines späteren zweiten Kanalbildes, Bildteile, einer in dem späteren ersten Kanalbild und einer in dem späteren zweiten Kanalbild, identifiziert werden (S410), wobei die Bildteile für die Konfigurationsänderung des Materialvolumens sowie für eine Position, wo in dem Materialvolumen die Änderung stattfand, bezeichnend sind;
erst nachdem die Bildteile erfolgreich identifiziert sind, aus den identifizierten Bildteilen ein 3D-Bildvolumenelement rekonstruiert wird (S415), wobei das so rekonstruierte 3D-Bildvolumenelement nur für die identifizierten Bildteile repräsentativ ist; und
das rekonstruierte 3D-Bildvolumenelement ausgegeben wird (S420).

11. Verfahren nach Anspruch 10, wobei,
i) wenn die Identifikation erfolgreich ist und bei Empfang eines nachfolgenden ersten Kanalbildes und eines nachfolgenden zweiten Kanalbildes durch Aktualisieren (S417) des früheren ersten Kanalbildes für das spätere erste Kanalbild und Ersetzen des späteren ersten Kanalbildes durch das nachfolgende erste Kanalbild sowie durch Aktualisieren des früheren zweiten Kanalbildes für das spätere zweite Kanalbild und Ersetzen des späteren zweiten Kanalbildes durch das nachfolgende zweite Kanalbild neue Bildpaare aus den Bildpaaren gebildet werden und, basierend auf den beiden neuen Paaren, der Identifikationsschritt sodann wiederholt wird, und wobei
ii) wenn die Identifikation scheitert und nach Empfang eines nachfolgenden ersten Kanalbildes sowie eines nachfolgenden zweiten Kanalbildes neue Bildpaare aus den Bildpaaren durch Aktualisieren (S412) des späteren ersten Kanalbildes für das nachfolgende erste Kanalbild und des späteren zweiten Kanalbildes für das nachfolgende zweite Kanalbild gebildet werden, wodurch das frühere erste und zweite Kanalbild aufrechterhalten werden, und, basierend auf den beiden neuen Paaren, der Identifikationsschritt sodann wiederholt wird.

12. Verfahren nach Anspruch 11, wobei der Schritt des Identifizierens der beiden Bildteile in einem Ausfall resultiert, wenn eine Größe und/oder ein Signal-Rausch-Verhältnis von mindestens einem des Bildteils in dem nachfolgenden ersten Kanalbild oder des Bildteils in dem nachfolgenden zweiten Kanalbild geringer als ein Grenzwert sind/ist, und
wobei der Identifikationsschritt erfolgreich ist, wenn die Größe und/oder das Signal-Rausch-Verhältnis von beiden, dem Bildteil in dem nachfolgenden ersten Kanalbild und dem Bildteil in dem nachfolgenden zweiten Kanalbild, größer als der Grenzwert sind/ist.

13. Bildverarbeitungssystem, umfassend:
eine Vorrichtung nach einem der Ansprüche 1-9;
einen zumindest 2-kanaligen Röntgen-Imager (100), der die beiden Ströme bereitstellt;
einen Bildschirm (M).

14. Bildverarbeitungssystem nach Anspruch 13, wobei der Röntgen-Imager ein Zweiebenen-Fluoroskop ist.

15. Computerprogrammelement zur Steuerung einer Vorrichtung nach einem der Ansprüche 1-9, das bei Ausführung durch eine Prozessoreinheit so eingerichtet ist, dass es die Verfahrensschritte nach den Ansprüchen 10-12 durchführt.

16. Computerlesbares Medium mit dem auf diesem gespeicherten Programmelement nach Anspruch 15.

## Revendications

1. Appareil de traitement d'image, comprenant :
une unité d'entrée (IU) destinée à recevoir depuis un premier canal (CX) un flux (FX) d'images de projection d'un objet (OB) acquises le long d'une première direction de projection et depuis un second canal (CY) un flux (FY) d'images de projection de l'objet (OB) acquises le long d'une seconde direction de projection, les images dans les deux canaux (CX, CY) étant acquises alors qu'un volume (E) de matériau réside dans l'objet (OB) et alors que ledit volume (E) de matériau subit un changement de configuration ;
un identifiant (ID) configuré pour identifier, sur la base i) d'une paire d'une première image de canal antérieure et d'une première image de canal ultérieure et ii) d'une paire d'une seconde image de canal antérieure et d'une seconde image de canal ultérieure, des parties d'image (ΔX, ΔY), une (ΔX) dans la première image de canal ultérieure et une (ΔY) dans la seconde image de canal ultérieure, lesdites parties d'image (ΔX, ΔY) indiquant le changement de configuration du volume (E) de matériau et indiquant une position où ledit changement s'est produit dans le volume de matériau ;
un reconstructeur d'image en 3D (PR) configuré pour reconstruire, seulement lorsque l'identifiant (ID) réussit à identifier lesdites parties d'image, à partir des parties d'image (ΔX, ΔY) identifiées, un élément de volume d'image en 3D, l'élément de volume d'image en 3D ainsi reconstruit étant seulement représentatif desdites parties d'image (ΔX, ΔY) identifiées ; et
un port de sortie (OU) configuré pour sortir l'élément de volume d'image en 3D reconstruit.

2. Appareil de traitement d'image selon la revendication 1, dans lequel le reconstructeur (PR) est configuré pour combiner ledit élément de volume d'image en 3D reconstruit et un élément de volume en 3D préalablement reconstruit de manière à former un volume en 3D cumulé (Vc), ledit volume en 3D cumulé étant représentatif de la configuration du volume de matériau jusqu'au moment de l'acquisition de l'image de projection ultérieure.

3. Appareil de traitement d'image selon la revendication 1, comprenant en outre :
un générateur d'affichage graphique (GDG) configuré pour générer, en vue d'un affichage sur un écran, un affichage graphique comprenant une vue de l'élément de volume d'image en 3D reconstruit, l'affichage graphique (GD) ainsi généré, lorsqu'il est affiché, procurant une vue seulement de la partie du volume de matériau où le changement de configuration s'est produit au moment de l'acquisition de l'image de projection ultérieure.

4. Appareil de traitement d'image selon la revendication 2, dans lequel l'affichage graphique (GD) comprend une vue de l'élément de volume d'image préalablement reconstruit, ledit élément de volume d'image préalable reconstruit à partir d'une partie d'image préalablement identifiée indiquant un changement préalable de la configuration du volume (E) de matériau, la vue ainsi générée procurant au moins une vue partielle de la configuration du volume de matériau jusqu'au moment de l'acquisition de l'image de projection ultérieure.

5. Appareil de traitement d'image selon la revendication 3 ou 4, dans lequel l'affichage graphique généré comprend une silhouette recouverte d'une région d'intérêt (ROI) dans l'objet (OB) où réside le volume (E) de matériau.

6. Appareil de traitement d'image selon l'une quelconque des revendications 1-5, comprenant en outre un synchroniseur (SYNC), dans lequel, lors de l'échec de l'opération d'identification et lors de la réception, au niveau du port d'entrée (IU), d'une première image de canal suivante et d'une seconde image de canal suivante, le synchroniseur (SYNC) est configuré pour former de nouvelles paires d'images à partir des paires d'images en mettant à jour le premier canal ultérieur pour la première image de canal suivante et la seconde image de canal ultérieure pour la seconde image de canal suivante, le synchroniseur (SYNC) étant ainsi configuré pour maintenir dans les nouvelles paires les première et seconde images de canal antérieures.

7. Appareil de traitement d'image selon la revendication 6, dans lequel l'opération d'identification échoue si une taille et/ou un rapport signal-bruit d'au moins une des parties d'image respectives dans la première image de canal suivante ou dans la seconde image de canal suivante sont inférieurs à une valeur limite, et
dans lequel l'opération d'identification réussit si la taille et/ou le rapport signal-bruit de la partie d'image dans la première image de canal suivante et de la partie d'image dans la seconde image de canal suivante sont supérieurs à la valeur limite.

8. Appareil de traitement d'image selon l'une quelconque des revendications 1-7, dans lequel les images de projection sont des images fluoroscopiques.

9. Appareil de traitement d'image selon l'une quelconque des revendications 1-8, où l'objet est une partie du système vasculaire d'un humain ou d'un animal et le volume de matériau est une quantité d'agent d'embolisation.

10. Procédé de traitement d'image, comprenant les étapes consistant à :
recevoir (S405) depuis un premier canal un flux d'images de projection d'un objet (OB) acquises le long d'une première direction de projection et depuis un second canal un flux d'images de projection de l'objet (OB) acquises le long d'une seconde direction de projection, les images dans les deux canaux étant acquises alors qu'un volume de matériau réside dans l'objet et alors que ledit volume de matériau subit un changement de configuration ;
identifier (S410), sur la base i) d'une paire d'une première image de canal antérieure et d'une première image de canal ultérieure et ii) d'une paire d'une seconde image de canal antérieure et d'une seconde image de canal ultérieure, des parties d'image, une dans la première image de canal ultérieure et une dans la seconde image de canal ultérieure, lesdites parties d'image indiquant le changement de configuration du volume de matériau et indiquant une position où ledit changement s'est produit dans le volume de matériau ;
seulement lorsque l'on réussit à identifier lesdites parties d'image, reconstruire (S415), à partir des parties d'image identifiées, un élément de volume d'image en 3D, l'élément de volume d'image en 3D ainsi reconstruit étant seulement représentatif desdites parties d'image identifiées ; et
sortir (S420) l'élément de volume d'image en 3D reconstruit.

11. Procédé selon la revendication 10, dans lequel,
i) si l'identification est réussie et à réception d'une première image de canal suivante et d'une seconde image de canal suivante, former de nouvelles paires d'images à partir des paires d'images en mettant à jour (S417) la première image de canal antérieure pour la première image de canal ultérieure et en remplaçant la première image de canal ultérieure par la première image de canal suivante et en mettant à jour la seconde image de canal antérieure pour la seconde image de canal ultérieure et en remplaçant la seconde image de canal ultérieure par la seconde image de canal suivante, puis répéter l'étape d'identification sur la base desdites deux nouvelles paires, et dans lequel
ii) si l'identification échoue et à réception d'une première image de canal suivante et d'une seconde image de canal suivante, former de nouvelles paires d'images à partir des paires d'images en mettant à jour (S412) le premier canal ultérieur pour la première image de canal suivante et la seconde image de canal ultérieure pour la seconde image de canal suivante, maintenant ainsi les première et seconde images de canal antérieures, puis répéter l'étape d'identification sur la base desdites deux nouvelles paires.

12. Procédé selon la revendication 11, dans lequel l'étape d'identification des deux parties d'image donne lieu à un échec si une taille et/ou un rapport signal-bruit de la partie d'image dans la première image de canal suivante et/ou de la partie d'image dans la seconde image de canal suivante sont inférieurs à une valeur limite, et
dans lequel l'étape d'identification réussit si la taille et/ou le rapport signal-bruit de la partie d'image dans la première image de canal suivante et de la partie d'image dans la seconde image de canal suivante sont supérieurs à la valeur limite.

13. Système de traitement d'image comprenant :
un appareil selon l'une quelconque des revendications précédentes 1-9 ;
un imageur à rayons X à au moins 2 canaux (100) apportant les deux flux ;
un écran (M).

14. Système de traitement d'image selon la revendication 13, dans lequel l'imageur à rayons X est un fluoroscope à deux plans.

15. Élément de programme informatique destinée à commander un appareil selon l'une quelconque des revendications 1-9, qui, lorsqu'il est exécuté par une unité de traitement, est conçu pour effectuer les étapes de procédé selon les revendications 10-12.

16. Support lisible par ordinateur sur lequel est stocké l'élément de programme de la revendication 15.
